# EUROPEAN PATENT SPECIFICATION

(11) **EP 3 772 636 B1**
(45) Date of publication and mention of the grant of the patent: **25.06.2025**
(21) Application number: 20189345.0
(22) Date of filing: 04.08.2020
(51) Int. Cl.: G01F 23/00, G01F 23/26, G01F 23/263, G01F 23/80, G01F 25/00

(54) **METER AND PROCESS FOR MEASURING THE LEVEL OF A LIQUID**
MESSGERÄT UND VERFAHREN ZUR MESSUNG DES NIVEAUS EINER FLÜSSIGKEIT
COMPTEUR ET PROCÉDÉ DE MESURE DU NIVEAU D'UN LIQUIDE

(30) Priority: 05.08.2019 IT 201900014043
(43) Date of publication of application: 10.02.2021
(73) Proprietor: LOGIC S.p.A., 20051 Cassina de' Pecchi (MI) (IT)
(72) Inventor: GRASSETTI, Riccardo, 20090 SEGRATE (MI) (IT); NORGIA, Michele, 20134 MILANO (IT); CAVEDO, Federico, 26029 SONCINO (CR) (IT); ESMAILI, Parisa, 24058 ROMANO (BG) (IT)
(74) Representative: Bonatto, Marco

(56) References cited:
- US-A1- 2007 101 811
- US-A1- 2013 298 667

## Description

### Field of the invention

The present invention relates to a meter and process for measuring the level of a liquid for example contained in a container.

The meter and the related installation process, use and operation, are particularly suitable for measuring the level of fuels or other flammable liquids with a high degree of safety against fires and detonations, for example for measuring the level of the fuel in the tanks of airplanes and other aircraft.

### State of the art

In order to detect the level of fuel in the tanks of airplanes and helicopters probes are currently known comprising an electric capacitor the plates of which are formed by a first outer tube and a second tube or solid pin arranged inside the first tube and longitudinally to it.

The two plates are radially separated from one another by a cavity having annular-shaped cross sections.

Such a cylindrical electric capacitor is arranged vertically in the tank so that as the level thereof changes the fuel rises more or less along the cavity that separates the two plates, thus changing the capacity of the capacitor.

Since the correlation between the level of the fuel in the tank and the capacity of the capacitor are known, from the measurement of this second magnitude it is possible to obtain the measurement of the level.

Although the potential difference between the plates is much below the level necessary to generate electrical discharges in the fuel, the authors of the present invention have observed that in this type of known probes there are inevitably electrical charges in direct contact with the fuel.

The authors of the present invention have observed that it would however be desirable and intrinsically safer to make a level sensor capable of operating without bringing electrical charges into contact with the liquid.

A purpose of the present invention is to avoid the aforementioned drawbacks and in particular to provide a meter and a process for measuring the level or the presence of a liquid in a tank or other container, which is more reliable and less dangerous than the devices and processes according to the state of the art.

### Summary of the invention

Such a purpose is achieved, according to a first aspect of the present invention, with a meter having the features according to claim **1.**

In a meter according to a particular embodiment of the invention, the signal generator (**9**) is configured to generate a substantially periodic probing signal, with a frequency preferably comprised between **5-30** Megahertz.

In a second aspect of the invention, such a purpose is achieved with a process having the features according

In a particular embodiment of such a process, the liquid is selected from the following group: petrol, kerosene, diesel, a petroleum distillate, a mixture of hydrocarbons, water or an aqueous mixture, a fuel, liquid oxygen or hydrogen.

The publication US2007/0101811A1 discloses an apparatus and a process for measuring inter alia the level of a fluid having the features of the preamble of claims **1, 12**.

US201113980451A relates to an apparatus for capacitive determining and/or monitoring at least of fill level of a medium in a container by measuring the phase shift.

Further features of the invention are the object of the dependent claims.

The advantages able to be obtained with the present invention will become clearer to those skilled in the art from the following detailed description of some particular non-limiting embodiments, illustrated with reference to the following schematic figures.

### List of Figures

Figure **1** shows a perspective view of a level meter according to a first particular embodiment of the present invention;
Figure 1A shows a perspective view, partially in section, of a section of the twisted pair of the sensitive body and of the power and/or transmission line of the meter of Figure **1****;**
Figure **2** shows an electrical scheme of the meter of Figure **1****;**
Figure **3** shows a side view of the sensitive element of a level meter according to an example not encompassed by the wording of the claims;
Figure **4** shows a side view of the sensitive element of a level meter according to another example not encompassed by the wording of the claims;
Figure **5** shows a side view of the sensitive element of a level meter according to a fourth particular embodiment of the present invention;
Figure **6** shows a side view of the sensitive element of a level meter according to a fifth particular embodiment of the present invention;
Figure **7** shows an example of installation of capacitive level sensors according to the prior art in a tank having a complex shape;
Figure **8** shows an example of installation of a level sensor according to the invention in the tank of Figure **7****.**

### Detailed description

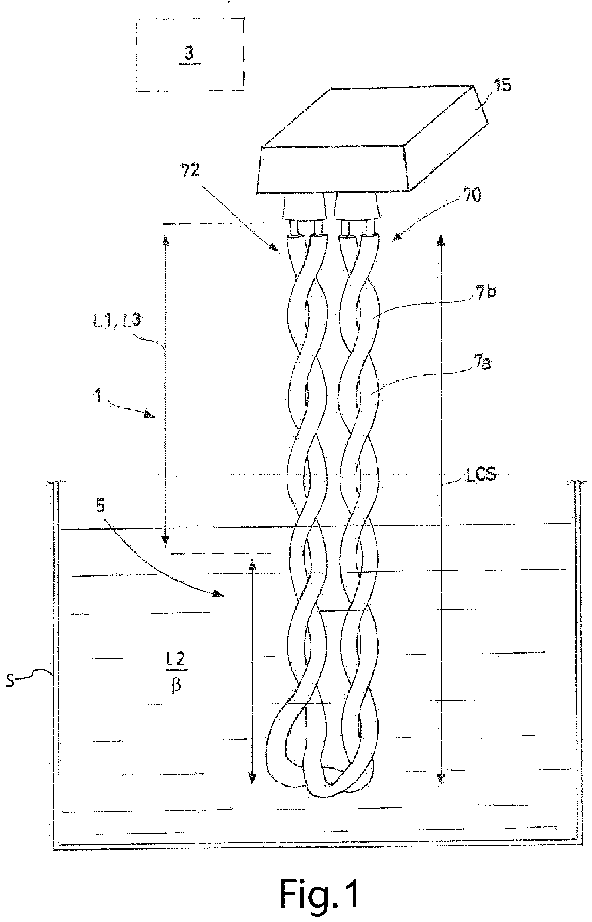

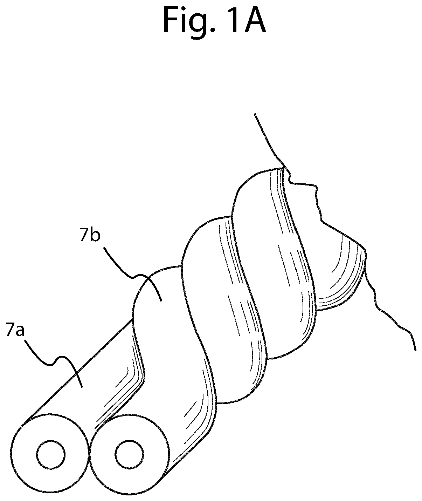

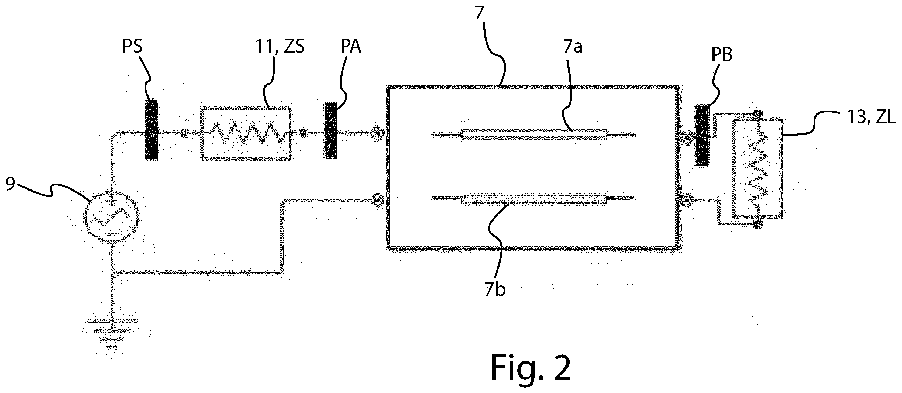

Figures **1****,** **1A****,** **2** relate to a meter, indicated with overall reference numeral **1,** for measuring the level of a liquid in a tank, cistern or other container S according to a first particular embodiment of the present invention.

The liquid can for example be petrol, kerosene, diesel fuel or other fuel for airplanes, helicopters or other aircraft, missiles, automobiles, trucks or other land vehicles.

The meter **1** comprises a logic unit **3,** a signal generator **9** and a sensitive body **5;** the latter comprises a power and/or transmission line **7** which in turn comprises at least two probing conductors **7**a, **7**b.

The logic unit **3** can comprise for example a microprocessor unit.

Each of such probing conductors **7**a, **7**b can for example be a wire or a track of an electrically conductive material; the track can for example be printed, glued, soldered or made by **3**D printing or through other additive production techniques (*additive manufacturing*) on an electrically insulating support, like for example a plate of Vetronite or other glass fibre.

Such an electrically insulating support can also be very flexible and pliable.

The power and/or transmission line **7** forms a downstream end **72** and an upstream end **70.**

The terms upstream end **70** and downstream end **72** in the present description are meant to indicate the ends of the conductors **7**a, **7**b respectively closest to and furthest from the signal generator **9** described hereinafter.

Each of the at least two probing conductors **7**a, **7**b extends between the upstream and downstream ends **70** and **72.**

The signal generator **9** can for example comprise an electric power supply.

The signal generator **9** is configured for supplying with power the power and/or transmission line **7** with a probing signal, which is preferably a periodic signal.

More preferably the probing signal is a sinusoidal periodic signal, having a square or triangular wave or a sum of sinusoidal fundamental frequency signals even different from one another.

According to the present invention, the logic unit **3** is configured for carrying out the following operations:
- determining the phase shift that the probing signal undergoes between at least two predetermined measurement points **PS, PA, PB** - measurement points described in greater detail hereinafter - of the electrical circuits of the meter **1;**
- based on such a phase shift determining the level of the predetermined liquid in which the sensitive body **5, 5', 5", 5**^{III}, **5**^{IV} is at least partially and possibly dipped.

The logic unit **3** is configured for determining, based on said phase shift, an electrical capacity equivalent to and/or influenced by at least one part of the meter (**1**) itself and/or the liquid in which the at least two probing conductors (**7**a, **7**b) are dipped.

The term phase shift of the probing signal is meant to indicate a delay that can even be equal to or greater than one or more periods of the probing signal initially generated and fed in the line **7**; such a delay can be measured in the time domain even as a delay between two non-periodic signals.

The meter **1** is provided with a first measurement electrical load **11** fed by at least one power line **7** and provided with a predetermined upstream measurement impedance ZS.

Preferably, the first measurement electrical load **11** powers at least one of the probing conductors **7**a, **7**b.

Advantageously, the upstream measurement impedance ZS is comprised between about **20-300** Ohm, or between **30-200** Ohm, or between **100-120** Ohm, between **90-130** Ohm, between **90-105** Ohm or between **90-110** Ohm.

The upstream measurement impedance ZS, as well as the downstream measurement impedance ZL described in greater detail hereinafter, is preferably purely resistive, i.e. made with one or more resistors.

The lowest frequency pole of the transfer function of the system comprising the first **11** and the possible second measurement electrical load **13** and the power line **7,** or more generally the lowest frequency electrical pole of the meter **1,** is advantageously comprised between **1-100** Megahertz, more preferably comprised between **1-30** megahertz, and even more preferably comprised between **10-20** megahertz or between **12-18** megahertz or roughly equal to **15** megahertz.

With the above selections of the impedance and of the fundamental frequency, the first measurement electrical load **11** sufficiently increases the impedance of the power supply **9,** which is often too low if it is a commercial component, allowing the system be adapted - i.e. causing it to operate in impedance adaptation conditions or close thereto - and increasing the precision of the measurement of the level of the liquid.

Advantageously, the meter **1** is provided with a second measurement electrical load **13** powered by the at least one power line **7** and provided with a predetermined downstream measurement impedance ZL.

The second measurement electrical load **13** is preferably powered by the downstream end of at least one of the probing conductors **7**a, **7**b.

Advantageously, the downstream measurement impedance ZL has the same values as the upstream measurement impedance ZS.

Advantageously, the two impedances ZS and ZL are selected so as to allow the meter to operate in impedance adaptation conditions, i.e. ensuring that the sum of the impedances ZS and of the signal generator **9,** and the impedance ZL of the second measurement load **11** are substantially equal to or almost equal to the characteristic impedance of the power and/or transmission line section **7** that extends between the first **11** and the second measurement electrical load **13.**

The term "substantially equal to or almost equal to the impedance of the power and/or transmission line section **7"** is meant to indicate that the sum of the impedances ZS and of the signal generator **9,** and the impedance ZL of the second measurement load **11** are substantially equal to the impedance of the aforementioned power and/or transmission line section **7** with a tolerance equal to or less than +- **20%** - and more preferably equal to or less than +- **10%** - of the modulus and of the specific impedance of the power and/or transmission line section **7** considered above.

The impedance adaptation condition makes it possible to maximise the power of the signal detected in the measurement points **PA** and **PB,** improving the precision, the repeatability and more generally the reliability of the measurements of the signals in such points, and therefore of the measurements of the meter **1.**

For this purpose, the characteristic impedance of the power and/or transmission line **7** is preferably comprised between **30-200** Ohm.

Such provisions, in particular those relative to impedance adaptation, allow the system be made easily and capable of operating well even with substantial changes with respect to the design conditions, for example if the length of the power and/or transmission line **7** changes.

As for example shown in Figure **2****,** a positive or negative pole/terminal of the possible power supply of the signal generator **9** can be optionally earthed or in any case connected to a reference electric potential.

The logic unit **3** is configured for determining, again based on the phase shift undergone by the probing signal between at least two of the predetermined measurement points **PS, PA, PB,** the time of flight of the probing signal in a predetermined portion of the power and/or transmission line **7.**

Advantageously, the power and/or transmission line **7** comprises a pair of electrically conductive wires **7**a, **7**b twisted together to form substantially a twisted pair (Figure 1, 1 A), so as to disperse a substantial fraction of their electric field into the space outside the wires themselves, and thus increasing the changes in electrical capacity, in impedance and in time of flight due to the change of the *"fringing field"* due to the change in level of the liquid in which the line **7** is dipped, and consequently increasing the level measuring sensitivity.

Moreover, the twisted pair of wires twisted together does not behave like an antenna, making the measurements thereof much less polluted by external electromagnetic disturbances.

Again to increase the precision of measurement and decrease the noise and the disturbances of the signals detected, the probing signal is a voltage signal with a rated or effective value advantageously equal to or greater than **0.1** volts (Vrms), more preferably equal to or greater than **1** volts (Vrms) and even more preferably equal to or less than **10** volt Vrms.

The electrically conductive wires **7**a, **7**b are advantageously each enclosed in a respective insulating sheath, for example made of suitable polymeric material, so that the electrically conductive wires - or more generally the probing conductors- **7**a, **7**b are electrically insulated from one another as well as from the liquid in which they can be dipped to measure the level thereof.

In order to make the sensitive body **5** sufficiently sensitive the insulating sheath that covers the wires **7**a, **7**b has a thickness preferably less than **1** millimetre, for example equal to or less than **0.5** millimetres, more preferably equal to or less than **0.1** millimetre.

The insulating sheath can also be made as a paint or enamel that solidifies on the conductors of the wires **7**a, **7**b.

Advantageously, such a twisted pair is bent substantially in a U or in any case so as to form a loop which forms the free end of the sensitive body **5** (Figure **1**).

Advantageously, such a loop - or more generally the sensitive body **5** - is arranged substantially vertical or at least so that it extends overall according to a top-bottom direction, even if not precisely vertical, so that it immerses to a greater or lesser extent in the liquid for which it is wished to measure the level.

In Figure **1** the loop formed by the twisted pair immerses in the liquid to be measured for a depth of L**2**/**β** (L**2** divided by beta), L**2** thus indicates the total length of the section of the twisted pair dipped in the liquid and β [beta] is a positive coefficient preferably comprised between **2** and **3,** more preferably comprised between **2** and **2.3.**

As shown for example in Figure **2****,** the phase shift undergone by the probing signal is measured between a first **PS** and a second measuring point **PA** respectively upstream and downstream of the first measurement electrical load **11,** for example immediately upstream and immediately downstream of the load **11.**

Preferably both the first **PS** and the second measuring point **PA** are both upstream of the section of the probing conductors **7**a, **7**b dipped in the liquid for which it is wished to measure the level (Figure **1**)**.**

This allow all of the electronic measurement devices be arranged on the same electronic board or PCB and/or in a same protective casing **15** not dipped in the liquid for which it is wished to measure the level.

For this purpose the meter **1** can comprise two synchronous samplers, not shown and for example of the *per* se known type, and configured to measure in a mutually synchronised manner the voltages or currents in the measurement points **PS** and **PA** of the electric line upstream and downstream of the first measurement electrical load **11.**

The adoption of synchronous samplers too contributes to separating the effects, maximising the measurement sensitivity of the phase shift and of the time of flight, simplifying the circuits and the processing algorithms.

Again as shown for example in Figure **2****,** in combination with what has been described previously, the phase shift undergone by the probing signal can be advantageously measured between two measurement points **PA, PB** arranged upstream and downstream of the section of the power and/or transmission line **7** dipped in the liquid for which it is wished to measure the level.

Such points can for example be the second **PA** and the third measuring point **PB** of the line **7.**

For this purpose the meter **1** can comprise two corresponding synchronous samplers, not shown and for example of the *per se* known type, and configured to measure in a mutually synchronised manner the voltages or currents in the measurement points **PA** and **PB** of the power and/or transmission line **7** and more generally of the electrical circuits of the meter **1.**

Advantageously, both of the measurement points **PA, PB** can be outside of the bath of the liquid for which it is wished to measure the level; such a solution is constructively simple and particularly advantageous because it makes it possible to arrange both the signal generator **9** and the second measurement electrical load **13** outside of the liquid bath, at the limit also outside of the tank or other container S containing the liquid; the generator **9** and the load **13** can thus be subject to less stringent requirements of impermeability and flammability than if it operated constantly dipped in the fuel or other liquid to be measured.

In other embodiments that are not shown, however, at least one among the second **PA** and third measuring point **PB** or both can be configured to operate constantly dipped in the liquid for which it is wished to measure the level.

It has been observed that the measured phase shifts of the probing signal between two different measurement points, for example between **PS** and **PA** or between **PA** and **PB,** are influenced by the length L**2** of the section of the twisted pair - and more generally of the section of the power and/or transmission line **7-** dipped in the liquid to be measured.

It can be hypothesised for such an influence to be due to the change in the electromagnetic field in the space created by the power and/or transmission line **7,** and as a consequence of the change in the capacity and the electrical impedance of the bodies and the region of space adjacent to the line **7.**

By analogy to the case of known flat plate electrical capacitors or a cylindrical capacitor, such a change in electrical capacity can be attributed to the so-called *fringing field* of the capacitor, i.e. to the portion of electromagnetic field coming out from the plates of the capacitor, which are preferably formed largely - for example so much as to give rise to at least **30%** of the electrical capacity of the line **7,** and more preferably so much as to give rise to at least **40%, 50%, 70%, 90%** or **95%** of the electrical capacity of the line **7** - by the probing conductors **7**a, **7**b.

More in particular such a change in electrical capacity can be attributed to the amount of energy of the fraction associated with the fundamental frequency of the electromagnetic field generated by the probing conductors **7**a, **7**b outside of it.

Two or more wire-like electrical conductors twisted to form a twisted pair, or more generally two wire-like, band-like or in any case elongated electrical conductors arranged side-by-side, form an electromagnetic field less concentrated adjacent to the conductors themselves with respect for example to a flat plate capacitor or to a cylindrical capacitor, and more distributed in more distant regions of space; the authors of the present invention deem that this renders a twisted pair of conductors, or in any case a bundle of wire-like or elongated electrical conductors, more sensitive - with respect to plates of other shapes - for detecting the changes in electrical capacity - or more generally inductance - and in time of flight due to the changes in level of the liquid in which such conductors are dipped.

The logic unit **3** can be advantageously configured to calculate the change in electrical capacity associated with the *fringing field* based on the phase shifts measured in the first **PS** and in the second measuring point **PA.**

For this purpose the logic unit **3** is configured for determining said electrical capacity, or in any case and more generally the aforementioned equivalent electrical capacity, determining, based on said phase shifts, one or more poles of the transfer function of at least part of the meter **1** and of the liquid in which the at least two probing conductors **7**a, **7**b are dipped.

Preferably, the logic unit **3** is programmed or in any case configured for determining such a capacity, determining the lowest frequency pole of such a transfer function, for example based on calculations and algorithms analogous to those that link the electrical capacity and the pole of a known RC filter.

In combination with the above the logic unit 3 is configured to calculate the time of flight of the probing signal in the section of the power and/or transmission line comprised between the second **PA** and the third measuring point **PB,** again based on the phase shift that the probing signal undergoes between the measurement points **PA** and **PB,** for example with *per se* mathematical processes and algorithms used for example in current laser telemeters.

Advantageously, the probing conductors **7**a, **7**b are coated with a material that is not very or not at all wettable, or their outer surface have been subjected to a suitable treatment that reduces or annulls the wettability, so as to prevent portions thereof from remaining wet even if out of the liquid, thus falsifying the measurement of the level.

The electrical capacity depends linearly from the dielectric constant of the capacitor considered, whereas the time of flight depends on the square root of the dielectric constant of the medium considered; therefore the two determinations of the electrical capacity and of the time of flight are alternatives and independent from one another, one being able to be used to verify the other, correct possible errors or imprecisions of measurement or determine further parameters like for example the dielectric constant of the liquid for which it is wished to measure the level.

The two measurements of the time of flight and of the pole or poles of the transfer function based on the phase shift of the probing signal can be carried out simultaneously or one after the other, a sufficiently short time after so as not to allow appreciable changes of the level of the liquid to be measured to occur.

The two measurements of the time of flight and of the pole or poles of the transfer function based on the phase shift of the probing signal can be carried out with probing signals of different frequencies, for example with a probing signal at about **1** Megahertz for the first measurement and with a probing signal of about **10** megahertz for the second or vice-versa.

Advantageously, the logic unit **3** or more generally the meter **1** is programmed or in any case configured to detect the phase shift of the signals acquired in the measurement points **PS, PA, PB** through suitable decimation or downsampling techniques.

The logic unit **3** or more generally the meter **1** is programmed or in any case configured to detect the phase shift of the signals acquired in the measurement points **PS, PA, PB** for example through discrete Fourier transform and/or determining the phase and square component with a synchronous digital receiver, which carries out the multiplication of the sampled signal by two square signals (sine and cosine at the same frequency), to then evaluate the Fourier coefficients thereof.

The logic unit **3** can be programmed or in any case configured to determine the phase shift between the voltages or currents detected in the measurement points **PS, PA** and/or **PA, PB** directly comparing signals having substantially the same frequency as the probing signal or in any case frequencies of the same order of magnitude, without frequency conversions, for example if the probing signal has relatively low frequencies, for example equal to or less than **10-20** Megahertz.

Possibly - for example if the probing signal has higher frequencies, for example equal to or greater than **20** Megahertz- the logic unit **3** or more generally the meter **1** can be provided with a frequency converter - for example a heterodyne converter - that transforms the signals measurement at the measurement points **PS, PA, PB** or others into lower frequency signals, making the phase shift with respect to the probing signal easier to measure.

For this purpose, the frequency converter can be configured to reduce the signals measured at the measurement points **PS, PA, PB** or others into signals at a frequency equal to or less than **10** or **20** Megahertz.

The frequency converter can comprise for example a mixer or sampler, for example of the *per se* known type.

The logic unit **3** or more generally the meter **1** can be programmed or in any case configured to carry out a calibration procedure of the measurement of the level of the liquid through the time of flight along the power and/or transmission line **7.**

Such a calibration procedure can comprise for example the steps of detecting the time of flight along the line **7** when the sensitive body **5** is completely in air and when it is completely dipped in the liquid for which it is wished to measure the level.

Since the length is known of the section of line **7** - or more generally of electrical circuit - along which the time of flight is measured, it is possible to correctly calibrate the meter **1.**

Since such a length is known, the measurement with sensitive body **5** completely dipped also provides a direct measurement of the properties of the liquid.

Like for example in the embodiments of Figures **1****,** **3-6** the sensitive body **5** forms a prolongation that extends for a total length LCS preferably comprised between **0.1-10** metres, between **0.5-1** metre, between **0.2-0.5** metres or between **0.2-0.3** metres.

The electrical path between the measurement points **PS** and **PB, PA** or **PB, PS** and **PA** can have a linear development the overall length of which is preferably comprised between **0.1-20** metres, between **0.1-20** metres, between **0.1-1** metres, between **0.1-0.6** metres, between **0.05-0.2** metres.

Like in Figures **1****,** **3-6** the sensitive body **5** preferably has a substantially oblong shape.

From laboratory tests the meter **1** described earlier proved capable of measuring levels of liquid of a few decimetres with a resolution of the order of millimetres, using a probing signal of frequency **10** Megahertz in real time, i.e. without frequency conversions.

More in particular it has been possible to make measurers **1** capable of detecting the level of a liquid, such as a hydrocarbon-based fuel or water, with a resolution of one millimetre on a measurement range for example of **30-40** centimetres; such a measurement field is for example capable of covering the excursions of the level of the fuel in the tank of a helicopter.

This means detecting delays or phase shifts between signals of the order of a few picoseconds through microprocessors occupying little space and having a cost compatible with mass production, of the order of a few units or tens of pieces in a year in the case for example of aeronautic applications, and even thousands or hundreds of thousands in the case for example of automobile applications.

In order to detect such short delays or phase shifts with relatively cheap electronic components, the logic unit **3** is programmed or in any case configured for detecting or in any case determining said phase shift based on at least **2000** voltage or current samples detected at the at least two predetermined measurement points **PS, PA, PB.**

More preferably, the logic unit **3** is configured to determine such a phase shift based on at least **4000** samples, more preferably based on at least **6000** samples and even more preferably based on at least **8000** samples.

For example, in order to obtain **8000** samples it is sufficient to sample the voltages or currents in the measurement points **PA, PB, PS** for **80** microseconds at a sampling frequency of **100** Megahertz.

Such numerous sampling operations allow the phase shifts, and therefore the delays and the times of flight, be measured with the required precision.

Since in the meter **1** the level of the liquid in which the sensitive body **5, 5', 5", 5**^{III}, **5**^{IV} dipped is determined by measuring the phase shifts and the delays that the probing signal undergoes at different points of the power and/or transmission line **7** or other points of the electrical circuit, there are not in any way electrical charge in direct contact with the fuel or in any case with the liquid for which it is wished to measure the level; the meter **1** can therefore reach much greater intrinsic safety levels against fire with respect to known capacitive level measurers and can be used to measure the level also of non-electrically insulating liquids.

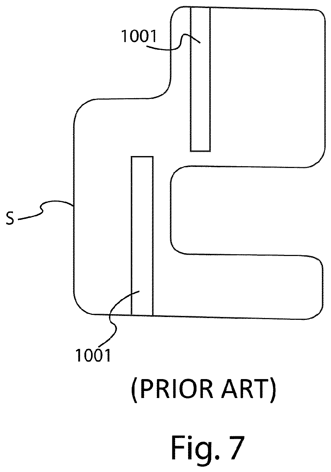

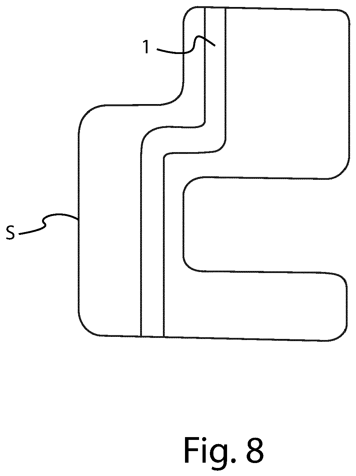

Since a twisted pair or in any case electric cables can be used as sensitive body, a meter according to the invention can be installed more easily in tanks of irregular shape, like those shown for example in Figures **7****,** **8****.**

Figure **7** schematically shows a tank of irregular shape in which two known capacitive level measurers **1001** are installed: such known capacitive measurers **1001,** for constructive reasons and performance, must use a necessarily rectilinear cylindrical capacitor as sensitive body.

Therefore, a single known meter **1001** is not capable of describing curves, adapting to the irregular shape of tanks S like the one shown, and the level must be measured with two or more rectilinear capacitive measurers **1001** arranged vertically so as to form the required broken line.

Since, on the other hand, the twisted pair or other cable thereof that, in particular embodiments, forms the sensitive body thereof, can be easily bent and describe curved or angled paths, a single meter according to the invention is sufficient to detect the changes in level in tanks even of very irregular shape (Figure **8**).

The choices described earlier of the impedances ZS and ZL and of the capacitive pole of the first **11** and of the second measurement electrical load **13** and of the power and/or transmission line **7,** as well as the particular choices described earlier of the fundamental frequency of the probing signal contribute to increasing the sensitivity and the resolution of the meter **1.**

The embodiments described above can undergo different modifications and changes without departing from the scope of protection of the present invention, which is defined by the appended claims.

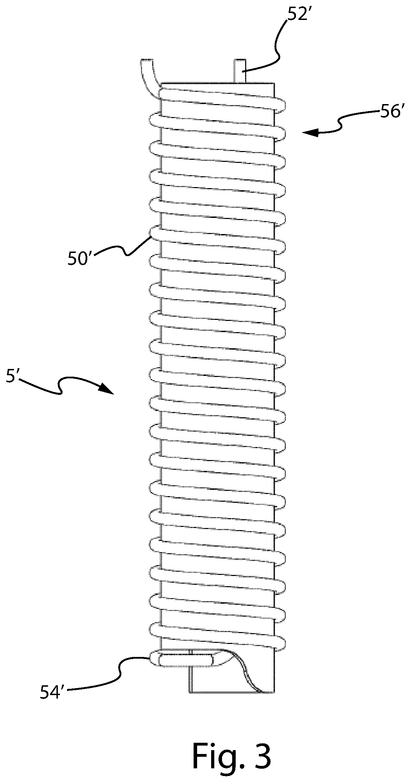

For example, the sensitive body **5, 5'** can comprise not only a plurality of wires or electric cables twisted on themselves to form a twisted pair (Figures 1, 1 A) but electrical conductors also of different geometries, and can comprise, according to an example not encompassed by the wording of the claims, a wire or other electric conductor wound to form a helix **50'** that forms a plurality of coils internally defining a cavity of substantially cylindrical or prismatic shape, and a rectilinear section **52'** that from the most distal coil **54'** rises inside such a cavity towards the proximal end **56'** of the sensitive body **5'** (Figure **3**).

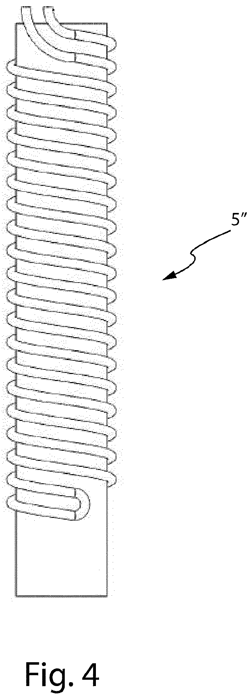

Like in the example not encompassed by the wording of the claims of Figure **4** the sensitive body **5"** can comprise a wire or other electric cable bent in a U and wound on itself so as to form a double helix - as if it was a helix with two helices - internally defining a cavity for example of substantially cylindrical or prismatic shape (Figure **4**).

In an embodiment that is not shown the sensitive body can comprise a bundle comprising a plurality of wires or other cables or electrical conductors arranged side-by-side and wound on themselves to form a multiple helix internally defining a cavity for example of substantially cylindrical or prismatic shape.

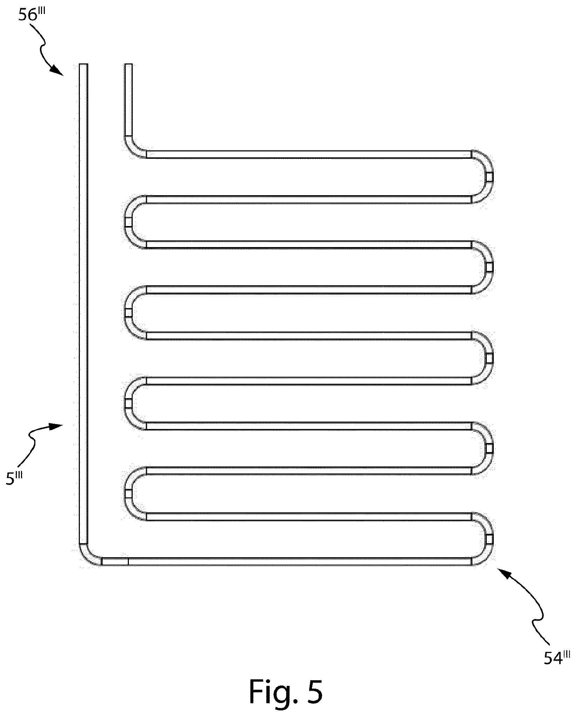

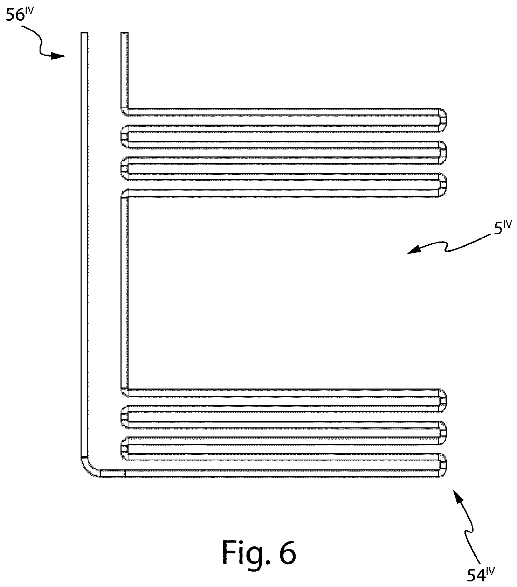

Like for example in the embodiments of Figures **5****,** **6** the sensitive body **5**^{III}, **5**^{IV} can comprise, according to an example not encompassed by the wording of the claim one or, according to the claimed invention, more wires, cables or other electrical conductors that form one or more coil sections, and possibly a rectilinear - or in any case less twisted - rising section that connects the distal ends **54**^{III}, **54**^{IV} and proximal ends **56^{III}, 56**^{IV} of the sensitive body itself.

The one or more coil sections can form one or more loops that extend substantially in a direction parallel or longitudinal to the free surface of the liquid for which it is wished to measure the level, where the free surface of the liquid is considered in conditions of normal operation or in suitable standard conditions.

Such sensitive bodies **5**^{III}, **5**^{IV} can have a substantially planar overall shape or form one or more tubular sections, for example formed from a respective coil section that encloses a substantially cylindrical or prismatic cavity.

The coil shape makes it possible to increase the sensitivity and the resolution of the measurements in particular sections and level ranges, or to make measurers that detect changes in level only for relatively rough and greatly discretized ranges, for example only distinguishing between a too full level, a too empty level and an intermediate level between them.

Any reference in this description to "an embodiment", "an example" means that a particular feature or structure described in relation to such an embodiment is included in at least one embodiment of the invention and in particular in a particular variant of the invention as defined in a main claim.

The fact that such expressions appear in various passages of the description does not mean that they necessarily refer only to the same embodiment.

Moreover, when a feature, element or structure is described in relation to a particular embodiment, it should be observed that it is within the capabilities of those skilled in the art to apply such a feature, element or structure to other embodiments.

Numerical references that differ only by different superscripts, e.g. **21', 21", 21**^{III} unless specified otherwise indicate different variants of an element called the same.

Moreover, all of the details can be replaced by technically equivalent elements.

For example, the materials used, as well as the sizes, can be whatever according to the technical requirements.

It should be understood that an expression of the type "A *comprises* B, C, D" or "A *is formed from* B, C, D" also comprises and describes the particular case in which *"*A *consists of* B, C, D".

The expression *"A comprises an element B"* unless specified otherwise should be interpreted as "*A comprises one or more elements B".*

References to a "first, second, third, ... n-th entity" have the only purpose of distinguishing them from one another but the indication of the n-th entity does not necessarily imply the existence of the first, second ... (n-**1**)th entity.

The examples and lists of possible variants of the present application should be interpreted as non-exhaustive lists.

## Claims

1. Meter (**1**) for measuring the level of a liquid, comprising one or more electrical circuits, said circuits comprising a logic unit (**3**), a sensitive body (**5, 5', 5", 5^{III}, 5^{IV}**) and a signal generator (**9**), wherein:
- the sensitive body (**5, 5', 5", 5^{III}, 5^{IV}**) comprises a power and/or transmission line (**7**), said line comprising at least two probing conductors (**7**a, **7**b), wherein said probing conductors are configured for being dipped in the liquid the level of which is to be measured;
- the signal generator (**9**) is configured for supplying the power and/or transmission line (**7**) with a probing signal;
- the logic unit (**3**) is configured for performing the following steps:
- determining the phase shift that the probing signal undergoes between at least two predetermined measurement points (**PS, PA, PB**) of the one or more electrical circuits of the meter (**1**);
- on the basis of said phase shift, determining the level of the predetermined liquid in which the sensitive body (**5, 5', 5", 5^{III}, 5^{IV}**) is at least partially and possibly dipped;
**wherein:**
- the logic unit (**3**) is configured for determining, on the basis of said phase shift, an electrical capacity equivalent to and/or influenced by at least one part of the meter (**1**) itself and/or to the liquid in which said at least two probing conductors (**7**a, **7**b) are dipped;
- **characterised in that:**
- the meter (**1**) is provided with a first measurement electrical load (**11**) fed by said at least one power line (**7**) and provided with a predetermined upstream measurement impedance (**ZS**);
- the logic unit (**3**) is configured for determining said equivalent electrical capacity by carrying out both of the following operations:
- on the basis of a first phase shift measured between a first (**PS**) and a second measurement point (**PA**) respectively upstream and downstream of the first measurement electrical load (**11**), determining one or more poles of the transfer function of at least part of the meter (**1**) and of the liquid in which said at least two probing conductors (**7**a, **7**b) are dipped;
- on the basis of a second phase shift that the probing signal undergoes between a second (**PA**) and third measurement point (**PB**), determining the time of flight of the probing signal in the section of the power and/or transmission line comprised between said second (**PA**) and third measuring point (**PB**).

2. Meter (**1**) according to claim **1**, wherein said at least two probing conductors (**7**a, **7**b) are electrical conductors extending side by side along the power and/or transmission line (**7**).

3. Meter (**1**) according to one or more of the previous claims, wherein said at least two probing conductors (**7**a, **7**b) are electrical conductors twisted or wound around each other and/or around a predetermined winding axis so as to substantially form a twisted pair and/or a helix.

4. Meter (**1**) according to one or more of the previous claims, wherein the logic unit (**3**) is programmed or in any case configured for detecting or in any case determining the phase shift that the probing signal undergoes between two measurement points (**PS, PA, PB**) of a portion of the one or more electrical circuits supplied by the signal generator (**9**), and in which at least one of these measurement points (**PB**) is along the power and/or transmission line (**7**) or downstream thereof.

5. Meter (**1**) according to one or more of the previous claims, wherein the logic unit (**3**) is programmed or in any case configured for detecting or in any case determining the phase shift that the probing signal undergoes between two measurement points (**PS, PA, PB**) of a portion of said one or more electrical circuits powered by the signal generator (**9**), and wherein at least one of said measurement points (**PS, PA**) is upstream of the power and/or transmission line (**7**).

6. Meter (**1**) according to one or more of the previous claims, wherein the logic unit (**3**) is programmed or in any case configured for detecting or in any case determining the phase shift that the probing signal undergoes between two measurement points (**PS, PA**) of a portion of said one or more electrical circuits supplied by the signal generator (**9**)**,** and wherein at least one first of said measurement points (**PS**) is upstream of the signal generator (**9**), and at least one second of such measurement points (**PA**) is downstream of the signal generator (**9**) and upstream of the power and/or transmission line (**7**).

7. Meter (**1**) according to claim **6,** wherein the logic unit (**3**) is programmed or in any case configured for determining, on the basis on said phase shift, one or more poles of the transfer function of at least part of the meter (**1**) and of the liquid wherein said the at least two probing conductors (**7**a, **7**b) are dipped.

8. Meter (**1**) according to one or more of the previous claims, wherein the logic unit (**3**) is programmed or in any case configured for detecting or in any case determining the phase shift that the probing signal undergoes between two measurement points (**PA, PB**) of a portion of said one or more electrical circuits supplied by the signal generator (**9**), and wherein at least a first one of said measurement points (**PA**) is downstream of the signal generator (**9**) and upstream of the supply and/or the transmission line (**7**), and at least one second of said measurement points (**PB**) is downstream of the power and/or transmission line (**7**).

9. Meter (**1**) according to claim **8**, wherein the logic unit (**3**) is programmed or in any case configured for determining, on the basis of said phase shift, the time of flight of the probing signal in a predetermined portion of the transmission and/or power line (**7**), for example in the section between the first (**PA**) and the second measuring point (**PB**).

10. Meter (**1**) according to one or more of the previous claims, wherein the logic unit (**3**) is programmed or in any case configured for detecting or in any case determining said phase shift on the basis of at least **2000** voltage or current samples detected in said at least two predetermined measurement points (**PS, PA, PB**).

11. Meter (**1**) according to one or more of the previous claims, wherein said logic unit (**3**) is configured for associating a determination of the predetermined liquid level with the determination of the detected time of flight.

12. Process for measuring the level of a liquid bath, comprising the following operations:
S**13.1**) providing a meter (**1**) comprising one or more electrical circuits, said circuits comprising a sensitive body (**5, 5', 5", 5^{III}, 5^{IV}**), wherein the sensitive body comprises a power and/or transmission line (**7**), said line comprises at least two probing conductors (**7**a, **7**b), wherein the meter (**1**) further comprises a first measurement electrical load (**11**) fed by said at least one power line (**7**) and provided with a predetermined upstream measurement impedance (**ZS**); ;
S**13.2**) at least partially dipping the sensitive body in the liquid bath;
S**13.3**) supplying the power and/or transmission line (**7**) with a probing signal;
S**13.4**) determining the phase shift that the probing signal undergoes between at least two predetermined measurement points (**PS, PA, PB**) of the one or more electrical circuits of the meter (**1**);
S**13.5**) determining, on the basis of said phase shift, an electrical capacity equivalent to and/or influenced by at least one part of the meter (**1**) itself and to the liquid in which said at least two probing conductors (**7**a, **7**b) are dipped;
S**13.6**) determining the level of the liquid bath based on said phase shift;
**characterised in that** said equivalent electrical capacity is determined by carrying out both of the following operations:
- on the basis of a first phase shift measured between a first (**PS**) and a second measurement point (**PA**) respectively upstream and downstream of the first measurement electrical load (**11**), determining one or more poles of the transfer function of at least part of the meter (**1**) and of the liquid in which said at least two probing conductors (**7**a, **7**b) are dipped;
- on the basis of a second phase shift that the probing signal undergoes between a second (**PA**) and third measurement point (**PB**), determining the time of flight of the probing signal in the section of the power and/or transmission line comprised between said second (**PA**) and third measuring point (**PB**)

13. Process according to claim **12**, wherein the sensitive body (**5**, **5'**, **5"**, **5**^{III}, **5**^{IV}) has a substantially oblong overall shape, and the process comprises the step of placing the sensitive body in a container (**S**) configured for containing the liquid, or close said container (**S**), with a substantially vertical orientation or in any case in such a way that it extends substantially from top to bottom.

## Patentansprüche

1. Messgerät (**1**) zur Messung des Niveaus einer Flüssigkeit, das eine oder mehrere elektrische Schaltungen umfasst, wobei die Schaltungen eine Logikeinheit (**3**), einen empfindlichen Körper **(5, 5', 5", 5^{III}**, **5^{IV}**) und einen Signalgenerator (**9**) umfassen, wobei:
- der empfindliche Körper (**5**, **5'**, **5", 5^{III}**, **5^{IV}**) eine Leistungs- und/oder Übertragungsleitung (**7**) umfasst, wobei die Leitung mindestens zwei Sondenleiter (**7**a, **7b**) umfasst, wobei die Sondenleiter so konfiguriert sind, dass sie in die Flüssigkeit, deren Niveau gemessen werden soll, eingetaucht werden;
- der Signalgenerator (**9**) so konfiguriert ist, dass er die Leistungs- und/oder Übertragungsleitung (**7**) mit einem Sondierungssignal versorgt;
- die Logikeinheit (**3**) für die Durchführung der folgenden Schritte konfiguriert ist:
- Bestimmen der Phasenverschiebung, die das Sondierungssignal zwischen mindestens zwei vorbestimmten Messpunkten (**PS, PA, PB**) des einen oder der mehreren elektrischen Schaltungen des Messgeräts (**1**) erfährt;
- Bestimmen, auf der Grundlage der Phasenverschiebung, des Niveaus der vorbestimmten Flüssigkeit, in die der empfindliche Körper (**5, 5', 5", 5^{III}**, **5^{IV}**) mindestens teilweise und möglicherweise eingetaucht ist;
**wobei:**
- die Logikeinheit (**3**) so konfiguriert ist, dass sie auf der Grundlage der Phasenverschiebung eine elektrische Kapazität bestimmt, die mindestens einem Teil des Messgeräts (**1**) selbst und/oder der Flüssigkeit, in die die mindestens zwei Sondenleiter (**7**a, **7**b) eingetaucht sind, entspricht und/oder von ihr beeinflusst wird;
**dadurch gekennzeichnet, dass:**
- der Zähler (**1**) mit einer ersten elektrischen Messlast (**11**) versehen ist, die von der mindestens einen Leistungsleitung (**7**) gespeist wird und mit einer vorbestimmten stromaufwärtigen Messimpedanz (**ZS**) versehen ist;
- die Logikeinheit (**3**) so konfiguriert ist, dass sie die entsprechende elektrische Kapazität bestimmt, indem sie beide der folgenden Operationen ausführt:
- auf der Grundlage einer ersten Phasenverschiebung, die zwischen einem ersten (**PS**) und einem zweiten Messpunkt (**PA**) jeweils stromaufwärts und stromabwärts der ersten elektrischen Messlast (**11**) gemessen wird, Bestimmen eines oder mehrerer Pole der Übertragungsfunktion von mindestens einem Teil des Messgeräts (**1**) und der Flüssigkeit, in die die mindestens zwei Sondenleiter (**7**a, **7**b) eingetaucht sind;
- auf der Grundlage einer zweiten Phasenverschiebung, die das Sondierungssignal zwischen einem zweiten (**PA**) und einem dritten Messpunkt (**PB**) erfährt, Bestimmen der Laufzeit des Sondierungssignals in dem Abschnitt der Leistungs- und/oder Übertragungsleitung, der zwischen dem zweiten (**PA**) und dem dritten Messpunkt (**PB**) liegt.

2. Messgerät (**1**) nach Anspruch **1**, wobei die mindestens zwei Sondenleiter (**7a**, **7b**) elektrische Leiter sind, die sich nebeneinander entlang der Leistungs- und/oder Übertragungsleitung (**7**) erstrecken.

3. Messgerät (**1**) nach einem oder mehreren der vorstehenden Ansprüche, wobei die mindestens zwei Sondenleiter (**7a**, **7b**) elektrische Leiter sind, die umeinander und/oder um eine vorbestimmte Wickelachse verdrillt oder gewickelt sind, so dass sie im Wesentlichen ein verdrilltes Paar und/oder eine Spirale bilden.

4. Messgerät (**1**) nach einem oder mehreren der vorstehenden Ansprüche, wobei die Logikeinheit (**3**) zum Erfassen oder jedenfalls zum Bestimmen der Phasenverschiebung, die das Sondierungssignal zwischen zwei Messpunkten (**PS**, **PA, PB**) eines Teils des einen oder der mehreren vom Signalgenerator (**9**) versorgten Stromkreise erfährt, und bei dem mindestens einer dieser Messpunkte (**PB**) entlang der Leistungs- und/oder Übertragungsleitung (**7**) oder stromabwärts davon liegt.

5. Messgerät (**1**) nach einem oder mehreren der vorstehenden Ansprüche, wobei die Logikeinheit (**3**) programmiert oder in jedem Fall konfiguriert ist, um die Phasenverschiebung zu erfassen oder in jedem Fall zu bestimmen, die das Sondierungssignal zwischen zwei Messpunkten (**PS, PA, PB**) eines Teils der einen oder mehreren elektrischen Schaltungen, die von dem Signalgenerator (**9**) gespeist werden, erfährt, und wobei mindestens einer der Messpunkte (**PS, PA**) stromaufwärts von der Leistungs- und/oder Übertragungsleitung (**7**) liegt.

6. Messgerät (**1**) nach einem oder mehreren der vorstehenden Ansprüche, wobei die Logikeinheit (**3**) so programmiert oder in jedem Fall so konfiguriert ist, dass sie die Phasenverschiebung erfasst oder in jedem Fall bestimmt, die das Sondierungssignal zwischen zwei Messpunkten (**PS, PA**) eines Teils des einen oder der mehreren elektrischen Schaltungen erfährt, die von dem Signalgenerator (**9**) versorgt werden, und wobei mindestens ein erster der Messpunkte (**PS**) stromaufwärts des Signalgenerators (**9**) liegt und mindestens ein zweiter solcher Messpunkte (**PA**) stromabwärts des Signalgenerators (**9**) und stromaufwärts der Leistungs- und/oder Übertragungsleitung (**7**) liegt.

7. Messgerät (**1**) nach Anspruch **6**, wobei die Logikeinheit (**3**) so programmiert oder jedenfalls konfiguriert ist, dass sie auf der Grundlage der Phasenverschiebung einen oder mehrere Pole der Übertragungsfunktion von mindestens einem Teil des Messgeräts **(1)** und der Flüssigkeit bestimmt, in die die mindestens zwei Sondenleiter (**7a, 7b**) eingetaucht sind.

8. Messgerät (**1**) nach einem oder mehreren der vorstehenden Ansprüche, wobei die Logikeinheit (**3**) programmiert oder in jedem Fall konfiguriert ist, um die Phasenverschiebung zu erfassen oder in jedem Fall zu bestimmen, die das Sondierungssignal zwischen zwei Messpunkten (**PA, PB**) eines Teils des einen oder der mehreren elektrischen Schaltungen erfährt, die von dem Signalgenerator (**9**) versorgt werden, und wobei mindestens ein erster der Messpunkte (**PA**) stromabwärts des Signalgenerators (**9**) und stromaufwärts der Versorgungs- und/oder Übertragungsleitung (**7**) liegt und mindestens ein zweiter der Messpunkte (**PB**) stromabwärts der Leistungs- und/oder Übertragungsleitung (**7**) liegt.

9. Messgerät (**1**) nach Anspruch **8**, wobei die Logikeinheit (**3**) so programmiert oder jedenfalls konfiguriert ist, dass sie auf der Grundlage der Phasenverschiebung die Laufzeit des Sondierungssignals in einem vorbestimmten Teil der Übertragungs- und/oder Leistungsleitung (**7**), beispielsweise in dem Abschnitt zwischen dem ersten (**PA**) und dem zweiten Messpunkt (**PB**), bestimmt.

10. Messgerät (**1**) nach einem oder mehreren der vorstehenden Ansprüche, wobei die Logikeinheit (**3**) so programmiert oder auf jeden Fall so konfiguriert ist, dass sie die Phasenverschiebung auf der Grundlage von mindestens **2000** Spannungs- oder Stromabtastwerten, die in den mindestens zwei vorbestimmten Messpunkten (**PS, PA**, **PB**) erfasst werden, erfasst oder auf jeden Fall bestimmt.

11. Messgerät (**1**) nach einem oder mehreren der vorstehenden Ansprüche, wobei die Logikeinheit (**3**) so konfiguriert ist, dass sie eine Bestimmung des vorbestimmten Flüssigkeitsniveaus mit der Bestimmung der erfassten Laufzeit verknüpft.

12. Verfahren zur Messung des Niveaus eines Flüssigkeitsbades, umfassend die folgenden Schritte:
**S13.1)** Bereitstellen eines Messgeräts (**1**), das einen oder mehrere elektrische Schaltungen umfasst, wobei die Schaltungen einen empfindlichen Körper **(5, 5', 5", 5^{III}**, **5^{IV}**) umfassen, wobei der empfindliche Körper eine Leistungs- und/oder Übertragungsleitung (**7**) umfasst, wobei die Leitung mindestens zwei Sondenleiter (**7a**, **7b**) umfasst, wobei das Messgerät (**1**) ferner eine erste elektrische Messlast (**11**) umfasst, die von der mindestens einen Leistungsleitung (**7**) gespeist wird und mit einer vorbestimmten stromaufwärts liegenden Messimpedanz (**ZS**) versehen ist;
**S13.2)** mindestens teilweises Eintauchen des empfindlichen Körpers in das Flüssigkeitsbad;
**S13.3)** Versorgen der Leistungs- und/oder Übertragungsleitung (**7**) mit einem Sondierungssignal;
**S13.4)** Bestimmen der Phasenverschiebung, die das Sondierungssignal zwischen mindestens zwei vorbestimmten Messpunkten (**PS, PA, PB**) des einen oder der mehreren elektrischen Schaltungen des Messgeräts (**1**) erfährt;
**S13.5)** Bestimmen, auf der Grundlage der Phasenverschiebung, einer elektrischen Kapazität, die mindestens einem Teil des Messgeräts (**1**) selbst und der Flüssigkeit, in die die mindestens zwei Sondenleiter (**7a, 7b**) eingetaucht sind, entspricht und/oder von ihnen beeinflusst wird;
**S13.6)** Bestimmen des Niveaus des Flüssigkeitsbades auf der Grundlage der Phasenverschiebung;
**dadurch gekennzeichnet, dass** die entsprechende elektrische Kapazität durch die Durchführung der beiden folgenden Vorgänge bestimmt wird:
- auf der Grundlage einer ersten Phasenverschiebung, die zwischen einem ersten (**PS**) und einem zweiten Messpunkt (**PA**) jeweils stromaufwärts und stromabwärts der ersten elektrischen Messlast (**11**) gemessen wird, Bestimmen eines oder mehrerer Pole der Übertragungsfunktion von mindestens einem Teil des Messgeräts (**1**) und der Flüssigkeit, in die die mindestens zwei Sondenleiter (**7a, 7b**) eingetaucht sind;
- auf der Grundlage einer zweiten Phasenverschiebung, die das Sondierungssignal zwischen einem zweiten (**PA**) und einem dritten Messpunkt (**PB**) erfährt, Bestimmen der Laufzeit des Sondierungssignals in dem Abschnitt der Leistungs- und/oder Übertragungsleitung, der zwischen dem zweiten (**PA**) und dem dritten Messpunkt (**PB**) liegt.

13. Verfahren nach Anspruch **12,** wobei der empfindliche Körper **(5, 5', 5", 5^{III}**, **5^{IV}**) eine im Wesentlichen längliche Gesamtform aufweist, und das Verfahren den Schritt des Einsetzens des empfindlichen Körpers in einen Behälter (**S**), der für die Aufnahme der Flüssigkeit konfiguriert ist, oder des Verschließens des Behälters (**S**) mit einer im Wesentlichen vertikalen Ausrichtung oder auf jeden Fall so, dass er sich im Wesentlichen von oben nach unten erstreckt, umfasst.

## Revendications

1. Compteur (**1**) pour mesurer le niveau d'un liquide, comprenant un ou plusieurs circuits électriques, lesdits circuits comprenant une unité logique (**3**), un corps sensible **(5, 5', 5", 5^{III}**, **5^{IV}**) et un générateur de signaux (**9**), dans lequel:
- le corps sensible **(5, 5', 5", 5^{III}**, **5^{IV}**) comprend une ligne d'alimentation et/ou de transmission (**7**), ladite ligne comprenant au moins deux conducteurs de sondage (**7a**, **7b**), lesdits conducteurs de sondage étant configurés pour être plongés dans le liquide dont le niveau doit être mesuré;
- le générateur de signaux (**9**) est configuré pour alimenter la ligne d'alimentation et/ou de transmission (**7**) avec un signal de sondage;
- l'unité logique (**3**) est configurée pour effectuer les étapes consistant à:
- déterminer le déphasage que le signal de sondage subit entre au moins deux points de mesure prédéterminés (**PS, PA, PB**) d'un ou de plusieurs circuits électriques du compteur (**1**);
- à partir dudit déphasage, déterminer le niveau du liquide prédéterminé dans lequel le corps sensible **(5, 5'**, **5", 5^{III}**, **5^{IV}**) est au moins partiellement et éventuellement plongé;
**dans lequel:**
- l'unité logique (**3**) est configurée pour déterminer, à partir dudit déphasage, une capacité électrique équivalente à et/ou influencée par au moins une partie du compteur (**1**) lui-même et/ou au liquide dans lequel lesdits au moins deux conducteurs de sondage (**7a, 7b**) sont plongés;
**caractérisé en ce que:**
- le compteur (**1**) est doté d'une première charge électrique de mesure (**11**) alimentée par ladite au moins une ligne électrique (**7**) et dotée d'une impédance de mesure amont prédéterminée (**ZS**);
- l'unité logique (**3**) est configurée pour déterminer ladite capacité électrique équivalente en effectuant les deux opérations consistant à:
- à partir d'un premier déphasage mesuré entre un premier (**PS**) et un deuxième point de mesure (**PA**) respectivement en amont et en aval de la première charge électrique de mesure (**11**), déterminer un ou plusieurs pôles de la fonction de transfert d'au moins une partie du compteur (**1**) et du liquide dans lequel sont plongés lesdits au moins deux conducteurs de sondage (**7a, 7b**);
- à partir d'un second déphasage que le signal de sondage subit entre un deuxième (**PA**) et un troisième point de mesure (**PB**), déterminer le temps de vol du signal de sondage dans la section de la ligne d'alimentation et/ou de transmission comprise entre ledit deuxième (**PA**) et troisième point de mesure (**PB**).

2. Compteur (**1**) selon la revendication **1**, dans lequel lesdits au moins deux conducteurs de sondage (**7a, 7b**) sont des conducteurs électriques s'étendant côte à côte le long de la ligne d'alimentation et/ou de transmission (**7**).

3. Compteur (**1**) selon une ou plusieurs des revendications précédentes, dans lequel lesdits au moins deux conducteurs de sondage (**7a, 7b**) sont des conducteurs électriques torsadés ou enroulés l'un autour de l'autre et/ou autour d'un axe d'enroulement prédéterminé de manière à former sensiblement une paire torsadée et/ou une hélice.

4. Compteur (**1**) selon une ou plusieurs des revendications précédentes, dans lequel l'unité logique (**3**) est programmée ou en tout cas configurée pour détecter ou en tout cas déterminer le déphasage que subit le signal de sondage entre deux points de mesure (**PS, PA, PB**) d'une partie du ou des circuits électriques alimentés par le générateur de signaux (**9**), et dans lequel au moins un de ces points de mesure (**PB**) se trouve le long de la ligne d'alimentation et/ou de transmission (**7**) ou en aval de celle-ci.

5. Compteur (**1**) selon une ou plusieurs des revendications précédentes, dans lequel l'unité logique (**3**) est programmée ou en tout cas configurée pour détecter ou en tout cas déterminer le déphasage que subit le signal de sondage entre deux points de mesure (**PS, PA, PB**) d'une partie dudit ou desdits circuits électriques alimentés par le générateur de signaux (**9**), et dans lequel au moins un desdits points de mesure (**PS, PA**) se trouve en amont de la ligne d'alimentation et/ou de transmission (**7**).

6. Compteur (**1**) selon une ou plusieurs des revendications précédentes, dans lequel l'unité logique (**3**) est programmée ou en tout cas configurée pour détecter ou en tout cas déterminer le déphasage que subit le signal de sondage entre deux points de mesure (**PS, PA**) d'une partie dudit ou desdits circuits électriques alimentés par le générateur de signaux (**9**), et dans lequel au moins un premier desdits points de mesure (**PS**) est en amont du générateur de signaux (**9**), et au moins un second de ces points de mesure (**PA**) est en aval du générateur de signaux (**9**) et en amont de la ligne d'alimentation et/ou de transmission (**7**).

7. Compteur (**1**) selon la revendication **6,** dans lequel l'unité logique (**3**) est programmée ou en tout cas configurée pour déterminer, à partir dudit déphasage, un ou plusieurs pôles de la fonction de transfert d'au moins une partie du compteur (**1**) et du liquide dans lequel lesdits au moins deux conducteurs de sondage (**7a, 7b**) sont plongés.

8. Compteur (**1**) selon une ou plusieurs des revendications précédentes, dans lequel l'unité logique (**3**) est programmée ou en tout cas configurée pour détecter ou en tout cas déterminer le déphasage que subit le signal de sondage entre deux points de mesure (**PA, PB**) d'une partie dudit ou desdits circuits électriques alimentés par le générateur de signaux (**9**), et dans lequel au moins un premier desdits points de mesure (**PA**) est en aval du générateur de signaux (**9**) et en amont de l'alimentation et/ou de la ligne de transmission (**7**), et au moins un second desdits points de mesure (PB) est en aval de la ligne d'alimentation et/ou de transmission (**7**).

9. Compteur (**1**) selon la revendication **8**, dans lequel l'unité logique (**3**) est programmée ou en tout cas configurée pour déterminer, à partir dudit déphasage, le temps de vol du signal de sondage dans une partie prédéterminée de la ligne de transmission et/ou d'alimentation (**7**), par exemple dans la section entre le premier (**PA**) et le deuxième point de mesure (**PB**).

10. Compteur (**1**) selon une ou plusieurs des revendications précédentes, dans lequel l'unité logique (**3**) est programmée ou en tout cas configurée pour détecter ou en tout cas déterminer ledit déphasage à partir d'au moins 2 **000** échantillons de tension ou de courant détectés dans lesdits au moins deux points de mesure prédéterminés (**PS, PA, PB**).

11. Compteur (**1**) selon une ou plusieurs des revendications précédentes, dans lequel ladite unité logique (**3**) est configurée pour associer une détermination du niveau de liquide prédéterminé à la détermination du temps de vol détecté.

12. Procédé de mesure du niveau d'un bain liquide, comprenant les opérations consistant à:
**S13.1)** fournir un compteur (**1**) comprenant un ou plusieurs circuits électriques, lesdits circuits comprenant un corps sensible **(5, 5', 5", 5^{III}**, **5^{IV}**), dans lequel le corps sensible comprend une ligne d'alimentation et/ou de transmission (**7**), ladite ligne comprend au moins deux conducteurs de sondage (**7a, 7b**), dans lequel le compteur (**1**) comprend en outre une première charge électrique de mesure (**11**) alimentée par ladite au moins une ligne d'alimentation (**7**) et dotée d'une impédance de mesure amont prédéterminée (**ZS**);
**S13.2**) plonger au moins partiellement le corps sensible dans le bain liquide;
**S13.3**) alimenter la ligne d'alimentation et/ou de transmission (**7**) avec un signal de sondage;
**S13.4**) déterminer le déphasage que subit le signal de sondage entre au moins deux points de mesure prédéterminés (**PS, PA, PB**) d'un ou de plusieurs circuits électriques du compteur (**1**);
**S13.5**) déterminer, à partir dudit déphasage, une capacité électrique équivalente à et/ou influencée par au moins une partie du compteur (**1**) lui-même et au liquide dans lequel sont plongés lesdits au moins deux conducteurs de sondage (**7a, 7b**);
**S13.6**) déterminer le niveau du bain liquide à partir dudit déphasage;
**caractérisé en ce que** ladite capacité électrique équivalente est déterminée en effectuant les deux opérations consistant à:
- à partir d'un premier déphasage mesuré entre un premier (**PS**) et un deuxième point de mesure (**PA**) respectivement en amont et en aval de la première charge électrique de mesure (**11**), déterminer un ou plusieurs pôles de la fonction de transfert d'au moins une partie du compteur (**1**) et du liquide dans lequel sont plongés lesdits au moins deux conducteurs de sondage (**7a, 7b**);
- à partir d'un second déphasage que le signal de sondage subit entre un deuxième (**PA**) et un troisième point de mesure (**PB**), déterminer le temps de vol du signal de sondage dans la section de la ligne d'alimentation et/ou de transmission comprise entre ledit deuxième (**PA**) et troisième point de mesure (**PB**).

13. Procédé selon la revendication **12,** dans lequel le corps sensible (**5, 5', 5", 5^{III}, 5^{IV}**) présente une forme globale sensiblement oblongue, et le procédé comprend l'étape consistant à placer le corps sensible dans un récipient (**S**) configuré pour contenir le liquide, ou à fermer ledit récipient (**S**), avec une orientation sensiblement verticale ou, en tout cas, de manière à ce qu'il s'étende sensiblement de haut en bas.
